(19) Europäisches Patentamt / European Patent Office / Office européen des brevets

(11) **EP 4 245 891 A1**

(12) **EUROPEAN PATENT APPLICATION**
published in accordance with Art. 153(4) EPC

(43) Date of publication:
**20.09.2023 Bulletin 2023/38**

(21) Application number: **21892325.8**

(22) Date of filing: **10.11.2021**

(51) International Patent Classification (IPC):
*C25B 11/091* (2021.01)      *C25B 1/04* (2021.01)
*C25B 9/23* (2021.01)

(52) Cooperative Patent Classification (CPC):
**C25B 1/04; C25B 9/23; C25B 11/091;** Y02E 60/36

(86) International application number:
**PCT/KR2021/016363**

(87) International publication number:
**WO 2022/103158 (19.05.2022 Gazette 2022/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.11.2020 KR 20200150363**

(71) Applicants:
- **Hanwha Solutions Corporation**
**Jung-gu**
**Seoul 04541 (KR)**
- **Korea Advanced Institute of Science and Technology**
**Daejeon 34141 (KR)**

(72) Inventors:
- **KIM, Gil Ho**
**Daejeon 34128 (KR)**
- **LEE, Hyunjoo**
**Daejeon 34141 (KR)**
- **ROH, Chi Woo**
**Daejeon 34128 (KR)**
- **SONG, Kyu Ho**
**Daejeon 34128 (KR)**
- **JEON, Sun Seo**
**Daejeon 34141 (KR)**

(74) Representative: **Berggren Oy**
**P.O. Box 16**
**Eteläinen Rautatiekatu 10A**
**00101 Helsinki (FI)**

(54) **ANODE FOR ANION EXCHANGE MEMBRANE WATER ELECTROLYSIS**

(57)   The present disclosure provides an oxidization electrode for anion exchange membrane water electrolysis having low cost, high performance, and high stability. Specifically, an embodiment of the present disclosure provides an oxidization electrode for anion exchange membrane water electrolysis, comprising: a nickel metal; and a layered double hydroxide (LDH) with a monolayer structure containing nickel and iron and disposed on one surface or both surfaces of the nickel metal.

[FIG. 1]

**EP 4 245 891 A1**

## Description

**[TECHNICAL FIELD]**

CROSS-REFERENCE TO RELATED APPLICATION(S)

This application claims the benefit of Korean Patent Application No. 10-2020-0150363 filed on November 11, 2020 with the Korean Intellectual Property Office, the disclosure of which is incorporated herein by reference in its entirety.

The present disclosure relates to an oxidization electrode for anion exchange membrane water electrolysis.

**[BACKGROUND ART]**

The importance of technologies capable of environmentally friendly production of hydrogen, which is a next-generation energy source that can solve deletion of fossil fuels and environmental pollution, is being emphasized.

According to the hydrogen economy revitalization roadmap recently announced by the Ministry of Trade, Industry and Energy of Korea, since a major portion of the hydrogen production is planned to be made by an environmentally friendly method, the development of water electrolysis, which is a representative technology for eco-friendly hydrogen production, is increasingly required.

In this regard, research on water electrolysis technology using an electrolysis method is being actively conducted, and as typical low-temperature water electrolysis technologies, proton exchange membrane water electrolysis (PEMWE) and alkaline water electrolysis (AWE) are known.

Among them, alkaline water electrolysis uses an alkaline aqueous solution as a reactant, and requires an electrode material having strong corrosion resistance in alkaline aqueous solution. As an electrode material candidate, a non-platinum-based metal such as nickel, iron, or cobalt, especially, a relatively low cost electrode material can be used. Since the electrode accounts for a significant portion of water electrolysis costs, it has the advantage of lowering hydrogen production costs when using non-platinum based metals. However, the alkaline water electrolysis system has disadvantages in that it requires a large space, has a low current per electrode area, and reduces efficiency due to the high overpotential required during hydrogen production.

Meanwhile, cation exchange membrane water electrolysis has the advantage of allowing a compact system design and having a high energy density. However, this requires a platinum-based metal capable of withstanding the acidic atmosphere of the cation exchange membrane, and thus has the disadvantage of increasing hydrogen production costs.

On the other hand, anion exchange membrane water electrolysis (AEMWE) is a system that can overcome the disadvantages while utilizing the advantages of existing systems. Since it is an alkaline environment, non-platinum metals can be used as electrode materials, and a prominent energy density can be achieved with a compact system design.

However, anion exchange membrane water electrolysis has not been studied much compared to existing systems, and exchange membranes and electrode materials that serve as standards for this are not known.

**[DETAILED DESCRIPTION OF THE INVENTION]**

**[Technical Problem]**

It is an object of the present disclosure to provide an oxidization electrode for anion exchange membrane water electrolysis having low cost, high performance and high stability.

**[Technical Solution]**

Specifically, in one embodiment of the present disclosure, there is provided an oxidization electrode for anion exchange membrane water electrolysis, comprising: a nickel metal; and a layered double hydroxide (LDH) with a monolayer structure containing nickel and iron and disposed on one surface or both surfaces of the nickel metal.

In another embodiment of the present disclosure, there is provided a method for manufacturing an oxidization electrode for anion exchange membrane water electrolysis, the method comprising a series of processes that use a bottom-up method to synthesize layered double hydroxide (LDH) containing nickel and iron into a monolayer structure, followed by vapor deposition on one surface or both surfaces of the nickel metal.

In yet another embodiment of the present disclosure, there is provided an anion exchange membrane water electrolysis cell comprising: an anion exchange membrane; and a reduction electrode and an oxidation electrode respectively disposed on both sides of the anion exchange membrane, wherein the oxidation electrode is the oxidation electrode of one embodiment described above.

**[Advantageous Effects]**

Since the oxidization electrode of the one embodiment includes nickel and iron, which are non-precious metals, it can be efficiently produced at low cost within a short time. By including the layered double hydroxide (LDH) with a monolayer structure containing nickel and iron, it is possible to secure high performance and high stability relative to the multilayer structure.

## [BRIEF DESCRIPTION OF THE DRAWINGS]

FIG. 1 shows the principle of an anion exchange membrane water electrolysis device.

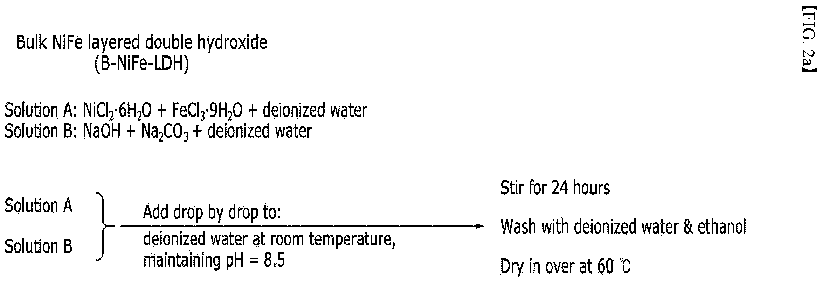

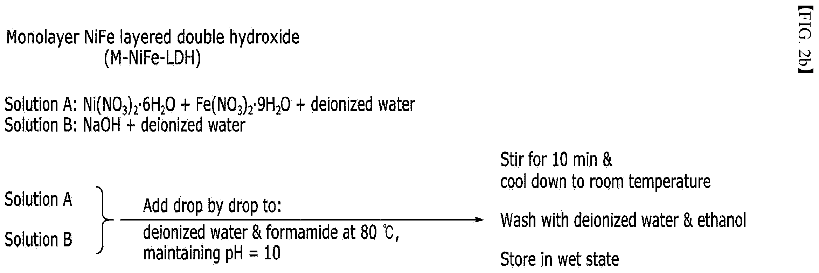

FIG. 2a shows the B-NiFe-LDH synthesis method, and FIG. 2b shows the M-NiFe-LDH synthesis method.

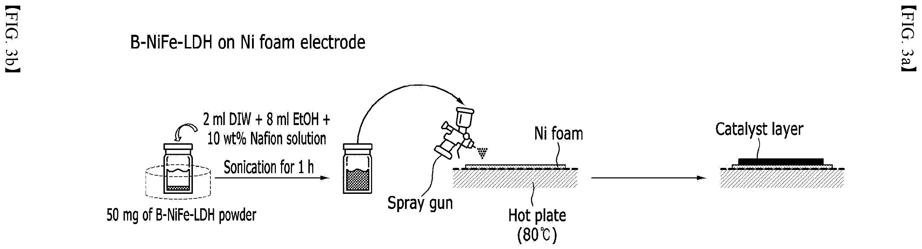

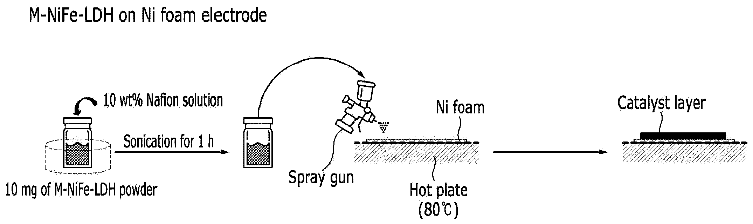

FIG. 3a shows a method for manufacturing an oxidization electrode using B-NiFe-LDH, and FIG. 3b shows a method for manufacturing an oxidization electrode using M-NiFe-LDH.

FIGS. 4a and 4b are TEM images of Preparation Example 2 (B-NiFe-LDH), and FIG. 4c is an EDS mapping image at the same scale.

FIGS. 4d and 4e are TEM images of Preparation Example 1 (M-NiFe-LDH), and FIG. 4f is an EDS mapping image at the same scale.

FIG. 5 is a diagram showing each XRD pattern of the catalyst (B-NiFe-LDH) of Comparative Example 1 in powder form, the catalyst (M-NiFe-LDH) of Example 1 dispersed in water to form a colloidal phase, and the catalyst (M-NiFe-LDH) of Example 1 dried in an oven into a powder.

FIGS. 6a to 6c are SEM images of the oxidization electrode (B-NiFe-LDH on Ni foam) of Comparative Example 1, and FIGS. 6d to 6f are SEM images of the oxidization electrode (M-NiFe-LDH on Ni foam) of Example 1.

FIG. 7a is a current-voltage graph of each anion exchange membrane water electrolysis cell of Comparative Examples 1 to 5; FIG. 7b is a current-voltage graph of each anion exchange membrane water electrolysis cell of Examples 1 to 4; and FIG. 7c is a current-voltage graph of anion exchange membrane water electrolysis cells of Example 3 and Comparative Examples 3 and 5, respectively.

FIG. 8 is a stability evaluation graph of each anion exchange membrane water electrolysis cell of Example 3, Comparative Example 3, and Comparative Example 6.

## [DETAILED DESCRIPTION OF THE EMBODIMENTS]

The terms "first," "second," etc. are used to explain various elements, and these terms are only used to distinguish one constitutional element from the other constitutional elements.

Further, the technical terms used herein is for the purpose of describing exemplary embodiments only and is not intended to limit the scope of the invention. The singular forms "a," "an" and "the" are intended to include plural forms, unless the context clearly indicates otherwise. It should be understood that the terms "comprise," "include", "have", etc. are used herein to specify the presence of stated features, integers, steps, components or combinations thereof, but do not preclude the presence or addition of one or more other features, integers, steps, components, or combinations thereof.

Further, as used herein, in case a layer or an element is mentioned to be formed "on" layers or elements, it means that the layer or element is directly formed on the layers or elements, or it means that other layers or elements may be additionally formed between the layers, on a subject, or on a substrate.

Although the present disclosure may have various forms and various modifications can be made thereto, specific examples will be exemplified and explained in detail. However, it is not intended to limit the present disclosure to any specific disclosed form, and it should be understood that all the modifications, equivalents or substitutions within the idea and technical scope of the present disclosure are included in the present disclosure.

### Oxidation Electrode for Anion Exchange Membrane Water Electrolysis

In one embodiment of the present disclosure, there is provided an oxidization electrode for anion exchange membrane water electrolysis, comprising: a nickel metal; and a layered double hydroxide (LDH) with a monolayer structure containing nickel and iron and disposed on one surface of the nickel metal.

This contains nickel and iron, which are non-precious metals, and thus, can be produced at low cost. By including such a layered double hydroxide (LDH) with a monolayer structure containing nickel and iron, it is possible to secure high performance and high stability relative to the multilayer structure.

1) In the oxidization electrode of the one embodiment, a layered double hydroxide (LDH) with a monolayer structure containing nickel and iron and located on one surface or both surfaces of the nickel metal functions as an oxygen generation catalyst.

In other words, the oxidation electrode of the one embodiment includes a monolayer-structured catalyst layer, and this monolayer-structured catalyst layer is actually a layered double hydroxide containing nickel and iron.

Generally, the layered double hydroxide (LDH) is a type of ionic solids having a two-dimensional structure.

Specifically, it has a multilayer structure of $[(AcB)\text{-}Z\text{-}(AcB)]_n$, where c represents a metal cation layer, A and B each represent hydroxide ion (OH) layers, Z means a layer containing other anions and neutral molecules (e.g., water), and n means the number of repetitions.

In the [AcB-Z-AcB] unit, the inserted anion or neutral molecule (Z) is weakly bound and exchangeable with other anions or neutral molecules. Further, the AcB interlayer distance with an anion or neutral molecule (Z) interposed therebetween is referred to as interlayer basal spacing.

2) In the field of general catalysts, nickel-iron layered double hydroxide in a bulk state is known to exhibit high catalytic performance.

Here, it may be a bulk layered double hydroxide (NiFe-LDH) containing nickel and iron, that is, a layered double hydroxide with a multilayer structure containing nickel and iron. Hereinafter, the bulk layered double hydroxide containing nickel and iron may be referred to as "B-NiFe-LDH".

Specifically, the B-NiFe-LDH has a monolayer structure as one unit (AcB) comprising a first hydroxide ion (OH-) layer (A), a metal layer (c) containing nickel and iron, and a second hydroxide ion (OH-) layer (B); and includes water or the like as neutral molecules along with other anions such as $CO_3^{2-}$ and $OH^-$ between the two units (AcB) (Z) to form a structure $[(AcB)\text{-}Z\text{-}(AcB)]_n$ in which a plurality of units are stacked.

Such a B-NiFe-LDH has a great disadvantage when used as an anion exchange membrane water electrolysis catalyst, and a typical reason therefor is low electrical conductivity and low stability.

Specifically, the B-NiFe-LDH has drawbacks that while the basal plane serves as a reaction site for the oxygen generation reaction, OH- used as a reactant cannot quickly diffuse into a multilayer structure, and the catalyst is dissolved while having a partially acidic environment between the catalyst layers. This will appear as a major problem in anion exchange membrane water electrolysis, which operates at a higher temperature and higher current than alkaline water electrolysis.

On the other hand, unlike B-NiFe-LDH, M-NiFe-LDH has a structure in which all basal planes are exposed to the reactant (OH-). Due to this structure, while OR is consumed, the problem that the catalyst dissolves without generating a partially acidic environment can be solved. In other words, M-NiFe-LDH can solve the problem of low stability caused by B-NiFe-LDH.

The oxidization electrode of the one embodiment includes a layered double hydroxide (LDH) with a monolayer structure containing nickel and iron. Hereinafter, the nickel-iron layered double hydroxide having a monolayer structure may be referred to as "M-NiFe-LDH".

M-NiFe-LDH contains only one unit (AcB) and can solve the problems of low electrical conductivity and low stability of B-NiFe-LDH. Specifically, M-NiFe-LDH has a higher intrinsic OER activity than B-NiFe-LDH due to its monolayer structure, and can improve anion exchange membrane water electrolysis performance.

Meanwhile, in the oxidization electrode of the one embodiment, the M-NiFe-LDH may be produced using a bottom-up method or a top-down method.

Among them, the bottom-up method simplifies a production process and enables more efficient electrode production as compared to the top-down method.

A method for producing the M-NiFe-LDH will be described later.

3) Furthermore, the electric conductivity can be further complemented by using nickel metal as a substrate.

Specifically, the M-NiFe-LDH is more affected by the substrate due to its small thickness relative to the B-NiFe-LDH. In this regard, by using a material with high electrical conductivity such as nickel metal (e.g., nickel foam, Ni foam) as a substrate, the electrical conductivity of the oxidization electrode can be further supplemented.

4) Therefore, the oxidation electrode of the one embodiment includes M-NiFe-LDH produced by a bottom-up method as a catalyst layer, and includes nickel metal as a substrate, thereby improving both the stability and the electrical conductivity.

Therefore, it is possible to increase the optimal catalyst amount and improve the performance of the water electrolysis cell as compared with an oxidation electrode that does not contain any catalyst layer; an oxidation electrode comprising B-NiFe-LDH as a catalyst layer; an oxidation electrode comprising M-NiFe-LDH as a catalyst layer produced by a top-down method; and the like.

The oxidation electrode of the above embodiment will be described in more detail below.

## Weight Ratio of Nickel/Iron in Layered Double Hydroxide

A weight ratio of nickel/iron in the layered double hydroxide (M-NiFe-LDH) may be 15/85 to 85/15.

Within this range, as the weight ratio of nickel/iron is closer to 25/75, overpotential during the oxygen generation reaction can decrease and catalyst performance can increase. As the ratio becomes larger or smaller than this ratio, overpotential during the oxygen generation reaction increases and the catalyst performance deteriorates. Taking this into consideration, the nickel/iron weight ratio can be controlled.

For example, the weight ratio of nickel/iron in the layered double hydroxide (M-NiFe-LDH) may be controlled within the range of 25/85 to 85/25.

## Loading Amount of Layered Double Hydroxide

A loading amount of the layered double hydroxide (M-NiFe-LDH) per one surface of the nickel metal may be 0.1 to 5 $mg/cm^2$.

Within the above range, as the loading amount of the layered double hydroxide (M-NiFe-LDH) increases, the performance of the anion exchange membrane water electrolysis cell is improved, so that the highest performance appears at 3 $mg/cm^2$, and performance can decrease in the range of greater than 3 $mg/cm^2$.

Considering this tendency, the loading amount of the layered double hydroxide (M-NiFe-LDH) per one surface of the nickel metal may be controlled within the range of 0.1 $mg/cm^2$ or more, 0.3 $mg/cm^2$ or more, 0.6 $mg/cm^2$ or more, or 1 $mg/cm^2$ or more, and 5 $mg/cm^2$ or less, 4.5. $mg/cm^2$ or less, or 4 $mg/cm^2$ or less.

The thickness of the layered double hydroxide (M-NiFe-LDH) may increase in proportion to its loading amount.

### Nickel Metal

The nickel metal may be a nickel foam (Ni foam) containing a large number of pores therein. For example, the porosity of the nickel metal may be 50 to 200 PPI (pores per inch), specifically 70 to 170 PPI, for example 110 PPI.

Further, the thickness of the nickel metal may be 150 to 350 $\mu$m, specifically 200 to 300 $\mu$m, for example 250 $\mu$m.

### Method for Manufacturing Oxidization Electrode for Anion Exchange Membrane Water Electrolysis

In another embodiment of the present disclosure, there is provided a method for manufacturing an oxidization electrode for anion exchange membrane water electrolysis, the method comprising a series of processes that use a bottom-up method to synthesize layered double hydroxide (LDH) containing nickel and iron into a monolayer structure, followed by vapor deposition on one surface or both surfaces of the nickel metal.

As a method of synthesizing M-NiFe-LDH, a top-down method and a bottom-up method can be considered. Among these, the one embodiment uses a bottom-up method which simplifies a production process and enables more efficient electrode production as compared with the top-down method.

Specifically, the method for manufacturing an oxidization electrode of the one embodiment comprises a step of injecting an alkaline aqueous solution and an aqueous metal solution containing a nickel source and an iron source into an aqueous formamide solution to produce a raw material mixture solution; a step of reacting the raw material mixture solution to produce a layered double hydroxide (LDH) with a monolayer structure containing nickel and iron; and a step of applying the layered double hydroxide onto one surface or both surfaces of nickel metal.

In the case of the top-down method, NiFe-LDH with a monolayer structure can be produced from B-NiFe-LDH. This is a method of increasing the interlayer basal spacing of B-NiFe-LDH through intercalated anion exchange, dispersing it in a formamide solvent, and then then exfoliating each layer by sonication, which requires a long time of about 1-2 weeks.

When using such a top-down method, the finally obtained M-NiFe-LDH is in a state of being dispersed in a formamide solvent, which may cause problems in the solvent removal step. Since formamide is a liquid with low volatility, rapid drying is impossible. Therefore, when using the top-down method, there is a fatal problem that efficient electrode production is impossible.

Meanwhile, the bottom-up method can produce M-NiFe-LDH through a one-step reaction, which simplifies the production process and enables synthesis within about 1 hour, thus greatly shortening the production time.

Further, when synthesized by the bottom-up method, the finally obtained M-NiFe-LDH is in a state of being dispersed in distilled water, and can be quickly dried as compared to the formamide solvent by the top-down method, thus enabling efficient electrode production.

### Preparation of Raw Material Mixture Solution

The aqueous metal solution may include 0.5 to 1.5 wt.%, e.g., 0.7 to 1.3 wt.% of a nickel source; 0.1 to 1.0 wt.%, e.g., 0.2 to 0.7 wt.% of an iron source; and the balance of water relative to the total amount (100 wt.%).

By adjusting the contents of the nickel source and the iron source, the nickel and iron contents in the final product (i.e., M-NiFe-LDH) can be controlled.

The nickel source may be nickel nitrate ($Ni(NO_3)_2$) or its hydrate ($Ni(NO_3)_2 \cdot 6H_2O$), and the iron source may be iron nitrate ($Fe(NO_3)_3$) or its hydrate ($Fe(NO_3)_3 \cdot 9H_2O$).

The alkaline aqueous solution may be an aqueous sodium hydroxide solution.

Specifically, the molar concentration of the aqueous sodium hydroxide solution may include 0.05 to 5 M, e.g., 0.1 to 3 M; and the balance of water.

The aqueous sodium hydroxide solution can serve to provide the $OH^-$ required for catalyst synthesis and adjust the pH to 9~11. When the sodium hydroxide content in the aqueous sodium hydroxide solution satisfies the above range, the desired shape, size, etc. of the catalyst can be obtained.

The aqueous formamide solution may contain 15 to 40 vol.%, e.g., 20 to 30 vol.% of formamide, and the balance water relative to the total amount (100 vol.%).

The aqueous formamide solution may serve to interact with hydroxide during catalyst synthesis and suppress growth in the z-axis (layered structure). Therefore, when the formamide content in the aqueous formamide solution satisfies the above range, the layered double hydroxide (M-NiFe-LDH) can be obtained.

During the preparation of the raw material mixture solution, 50 to 200 parts by weight, e.g., 70 to 130 parts by weight of the alkaline aqueous solution; and 50 to 200 parts by weight, e.g., 70 to 130 parts by weight of the aqueous metal solution may be mixed based on 100 parts by weight of the aqueous formamide solution.

### Reaction of Raw Material Mixture Solution (Preparation of M-NiFe-LDH)

During the reaction of the raw material mixture solution, the pH of the raw material mixture solution may be controlled within the range of 9 to 11, for example, 9.5 to 10.5 using the alkaline aqueous solution.

During the reaction of the raw material mixture solution, the pH may affect the final form of the catalyst.

The layered double hydroxide (M-NiFe-LDH) can be satisfactorily synthesized as long as the pH is maintained within the above range.

The reaction of the raw material mixture solution may be carried out within a temperature range of 70 to 90°C, for example, 75 to 85°C.

During the reaction of the raw material mixture solution, the temperature may affect the rate at which the catalyst is synthesized, thereby affecting the shape, size, and the like of the catalyst.

The reaction of the raw material mixture solution may be carried out for 1 to 20 minutes, for example, 5 to 15 minutes.

During the reaction of the raw material mixture solution, the reaction time may affect the crystallinity of the catalyst.

Treatment after Reaction (Preparation of M-NiFe-LDH)

After the reaction of the raw material mixture solution, it may further comprise a step of washing the layered double hydroxide (M-NiFe-LDH) using a washing solvent; and a step of dispersing the washed layered double hydroxide (M-NiFe-LDH) in water.

Specifically, the layered double hydroxide (M-NiFe-LDH) is washed with a washing solvent (e.g., a mixed solution of water and ethanol), impurities remaining in the layered double hydroxide (M-NiFe-LDH) are dissolved in the solvent, and then centrifuged to remove a solvent in which the impurities are dissolved

The layered double hydroxide (M-NiFe-LDH) thus washed is dispersed in water, so that an aqueous solution containing layered double hydroxide (M-NiFe-LDH) and water can finally be obtained.

Application of M-NiFe-LDH

When applying the layered double hydroxide to one surface of the nickel metal, an aqueous solution containing the layered double hydroxide and water can be applied.

Further, a Nafion solution can be added to the layered double hydroxide and then applied.

Here, since Nafion is dispersed and applied together with the catalyst, it can function as a binder to prevent detachment of the catalyst during the reaction. As the Nafion solution, one having a Nafion content of 5 to 10 wt.% relative to the total amount (100 wt.%) can be used.

When applying the layered double hydroxide, a spray drying method can be used.

Further, when applying the layered double hydroxide, the nickel metal may be disposed on a hot plate at 70 to 90°C.

When using the spray drying, it may be advantageous for evenly applying the catalyst. At this time, when the temperature of the nickel metal is within the above range, the evaporation rate of the solvent can be well controlled so that the catalyst can be evenly applied.

**Anion Exchange Membrane Water Electrolysis Cell**

In yet another embodiment of the present disclosure, there is provided an anion exchange membrane water electrolysis cell comprising: an anion exchange membrane; and a reduction electrode and an oxidation electrode respectively disposed on both sides of the anion exchange membrane, wherein the oxidation electrode is the oxidation electrode of one embodiment described above.

This may have improved water electrolysis performance by including the oxidation electrode of one embodiment described above.

Hereinafter, description of the oxidation electrode of the one embodiment will be omitted, and other components will be described in detail.

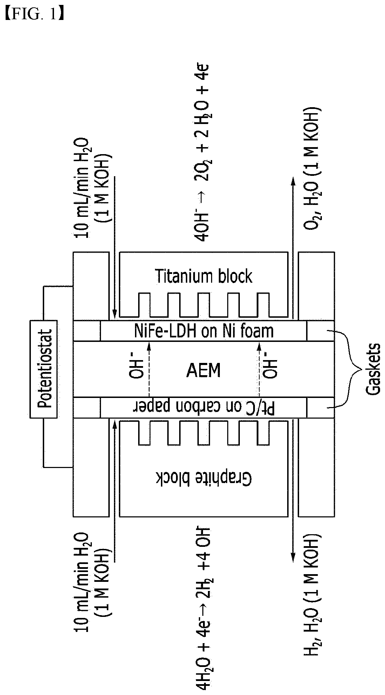

FIG. 1 shows a water electrolysis cell of one embodiment.

The water electrolysis cell of the one embodiment may include a potentiostat connected to a reduction electrode and an oxidation electrode, respectively.

As the oxidization electrode, the oxidization electrode of one embodiment described above may be used, and as the reduction electrode, composite coatings of platinum (Pt) and carbon (C) on carbon paper may be used.

Although only one water electrolysis cell is shown in FIG. 1, one water electrolysis cell is used as a unit cell, and a plurality of unit cells may be stacked in series to configure a water electrolysis stack.

The water electrolyte stack may include an electrolyte tank (not shown), and the electrolyte tank stores an alkaline aqueous solution such as potassium hydroxide (KOH) and sodium hydroxide (NaOH), and may serve to supply this to the anion exchange membrane.

When an alkaline aqueous solution is supplied from the electrolyte tank to the anion exchange membrane and DC power source is applied to the oxidation electrode and the reduction electrode, hydroxide ion (OH$^-$), which is a decomposition product of the alkaline aqueous solution in the anion exchange membrane, may catalytically react on the surface of the oxidation electrode to generate oxygen, water, and electrons, and electrons can move to the reduction electrode along an external wire. On the surface of the reduction electrode, electrons and water may catalytically react to generate hydrogen and hydroxide ions (OH$^-$). Oxygen generated at the oxidation electrode and hydrogen generated at the reduction electrode may be moved to and stored in a storage tank (not shown) outside the unit cell.

Other matters may be implemented with reference to a water electrolysis cell and a water electrolysis stack, which are widely known in the art.

Preferred embodiments are presented below to aid understanding of the invention. However, the following examples are for illustrative purposes only and are not intended to limit the invention only thereto.

**<PREPARATION EXAMPLE>**

**Preparation Example 1: Preparation of M-NiFe-LDH by bottom-up method**

218.1 mg of $Ni(NO_3)_2 \cdot 6H_2O$ and 101.0 mg of $Fe(NO_3)_3 \cdot 9H_2O$ were dissolved in 20 ml of deionized water to prepare Solution A (aqueous metal solution). Here, the metal weight ratio of Ni:Fe is 3:1.

Independently of this, NaOH was dissolved in 20 ml of deionized water to prepare Solution B (alkaline aqueous solution) at a concentration of 0.25M.

The internal temperature of a constant-temperature water bath was prepared to be 80°C.

15 ml of deionized water and 5 ml of formamide were added to a round bottom flask with a capacity of 100 ml, the round bottom flask was immersed in a constant-temperature water bath in which the internal temperature was maintained at 80°C, and then the mixture was stirred at a speed of 600 rpm to prepare an aqueous formamide solution. Then, the resulting aqueous solution was allowed to stand for about 5 minutes.

Under an air atmosphere at room temperature, pH=10 was maintained while adding the Solution A and the Solution B to the round bottom flask at the same time. The addition of each solution was carried out in a drop-by-drop manner, and the addition was completed within 10 minutes.

When the addition of each solution was completed, the mixture was stirred at a speed of 600 rpm for 10 minutes.

Then, it was cooled down at room temperature for 30 minutes, washed three times with deionized water and once with ethanol through a centrifuge.

If gel precipitates during washing with the centrifuge, it can be sufficiently dispersed through bath sonication, and then the washing process can proceed again.

After the washing process is completed, it is dispersed in water and stored. At this time, the concentration can be confirmed through ICP.

Thus, an aqueous solution containing M-NiFe-LDH and water (hereinafter, referred to as "M-NiFe-LDH aqueous solution of Preparation Example 1") was obtained. The solid content in the M-NiFe-LDH aqueous solution of Preparation Example 1 is about 88.33 wt.% based on 100 wt.% of the total aqueous solution.

**Preparation Example 2: Preparation of B-NiFe-LDH**

32 mg of $NiCl_2 \cdot 6H_2O$ and 10.7 mg of $FeCl_3$ were added to 40 ml of deionized water, and sufficiently dispersed by bath sonication to prepare Solution C. Here, the metal weight ratio of Ni:Fe is 3:1.

Independently of this, 68.3 mmol of NaOH and 21.3 mmol of $Na_2CO_3$ were dissolved in 40 ml of deionized water to prepare Solution D.

80 ml of deionized water was added to a round bottom flask with a capacity of 250 ml, and stirred at a speed of 600 rpm.

Under an air atmosphere at room temperature, pH=8.5 was maintained while adding the Solution C and the Solution D to the round bottom flask at the same time.

When the addition of each solution was completed, the mixture was stirred at a speed of 600 rpm for 24 hours.

Then, it was washed three times with deionized water and once with ethanol through a centrifuge.

After washing with the centrifuge, it was dried for 24 hours in a 60°C convention oven.

Thereafter, it was finely ground into a powder form using a mortar and pestle, and then stored under vacuum conditions.

**<EXAMPLE>**

**Example 1**

**(1) Manufacture of Oxidation Electrode**

10 mL of the M-NiFe-LDH aqueous solution of Preparation Example 1 and 158.730 mL of the Nafion aqueous solution containing 10 wt.% of Nafion was placed into a vial, and sonicated at 20 Hz for 1 hour.

A nickel foam having a porosity of 110 PPI and a thickness of 250 μm was disposed on a hot plate at 80°C. The sonicated aqueous solution was evenly sprayed on the Ni foam to form a catalyst layer.

At this time, spraying was performed at a spray speed of 2 l/min using a spray drying device (product name: INFINITY CR plus 0,4 [v2.0], manufacturer: INFINITY) to manufacture the oxidation electrode of Example 1 in which the loading amount of the catalyst layer per one surface of the nickel foam was 1.0 mg/cm$^2$.

**(2) Manufacture of Anion Exchange Membrane Water Electrolysis Cell**

Each water electrolysis cell was manufactured using the oxidization electrode of Example 1.

Specifically, as a reduction electrode, an electrode in which carbon carried with platinum catalyst (40 wt.% Pt/C) was spray-coated on a carbon paper was used, and an anion exchange membrane (Sustainion™, Dioxide Materials) was used.

With the anion exchange membrane interposed therebetween, the oxidation electrode and the reduction electrode were disposed on both sides to manufacture a laminate in which the oxidization electrode/anion exchange membrane/reduction electrode were stacked in this order, and then a gasket was placed and pressurized with a torque of 100 kg f cm to complete the anion exchange membrane electrolysis cell of Example 1.

The cell has a reaction area of 5 cm$^2$, and a titanium block with single serpentine flow-pattern was used as a passage for delivering reactants (1M KOH) and products (oxygen) to the oxidization electrode, and a graphite block with a single serpentine flow-pattern was used as a passage for delivering reactants (1M KOH) and products (hydrogen) to the reduction electrode. This block abuts on the gold plated current collector, which is connected to Potentiostat. Other details were in accordance with a method for manufacturing an anion exchange membrane water electrolysis cell generally known in the art.

**Example 2**

An oxidation electrode and an anion exchange membrane water electrolysis cell of Example 2 were manufactured in the same manner as in Example 1, except that the loading amount of the catalyst layer per one surface of the Ni foam was changed to 2.0 mg/cm$^2$.

**Example 3**

An oxidation electrode and an anion exchange membrane water electrolysis cell of Example 3 were manufactured in the same manner as in Example 1, except that the loading amount of the catalyst layer per one surface of the Ni foam was changed to 3.0 mg/cm$^2$.

**Example 4**

An oxidation electrode and an anion exchange membrane water electrolysis cell of Example 4 were manufactured in the same manner as in Example 1, except that the loading amount of the catalyst layer per one surface of the Ni foam was changed to 4.0 mg/cm$^2$.

**Comparative Example 1**

**(1) Manufacture of oxidation electrode**

50 mg of the B-NiFe-LDH powder of Preparation Example 2, and 158.730 mL of a Nafion aqueous solution containing 10 wt.% of Nafion was placed into a vial, and sonicated at 20 Hz for 1 hour.
A nickel foam having a porosity of 110 PPI and a thickness of 250 $\mu$m was disposed on a hot plate at 80°C. The sonicated aqueous solution was evenly sprayed on the Ni foam to form a catalyst layer.
At this time, spraying was performed at a spray speed of 2 l/min using a spray drying device (product name: INFINITY CR plus 0,4 [v2.0], manufacturer: INFINITY) to manufacture the oxidation electrode of Comparative Example 1 in which the loading amount of the catalyst layer per one surface of the nickel foam was 1.0 mg/cm$^2$.

**(2) Manufacture of anion exchange membrane water electrolysis cell**

A water electrolysis cell of Comparative Example 1 was manufactured in the same manner as in Example 1, except that the oxidization electrode of Comparative Example 1 was used instead of the oxidization electrode of Example 1.

**Comparative Example 2**

An oxidation electrode and an anion exchange membrane water electrolysis cell of Comparative Example 2 were manufactured in the same manner as in Comparative Example 1, except that the loading amount of the catalyst layer per one surface of the Ni foam was changed to 1.5 mg/cm$^2$.

**Comparative Example 3**

An oxidation electrode and an anion exchange membrane water electrolysis cell of Comparative Example 3 were manufactured in the same manner as in Comparative Example 1, except that the loading amount of the catalyst layer per one surface of the Ni foam was changed to 2.0 mg/cm$^2$.

**Comparative Example 4**

An oxidation electrode and an anion exchange membrane water electrolysis cell of Comparative Example 4 were manufactured in the same manner as in Comparative Example 1, except that the loading amount of the catalyst layer per one surface of the Ni foam was changed to 3.0 mg/cm$^2$.

**Comparative Example 5**

An oxidation electrode and an anion exchange membrane water electrolysis cell of Comparative Example 5 were manufactured in the same manner as in Comparative Example 1, except that Nickel foam itself was used as an oxidization electrode.

**Comparative Example 6**

An oxidation electrode and an anion exchange membrane water electrolysis cell of Comparative Example 6 were manufactured in the same manner as in Comparative Example 1, except that commercially available iridium oxide (IrOx) was used instead of the M-NiFe-LDH powder of Comparative Example 1.

**Experimental Example 1: Evaluation of Binder for Oxidation Electrode (1) TEM**

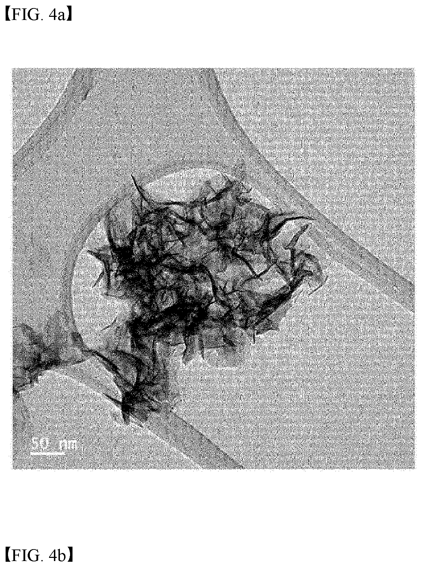

TEM (Transmission Electron Microscope) images and elemental distribution images of Preparation Example 1 (M-NiFe-LDH) and Preparation Example 2 (B-NiFe-LDH) were obtained, and shown in FIGS. 4a to 4f.

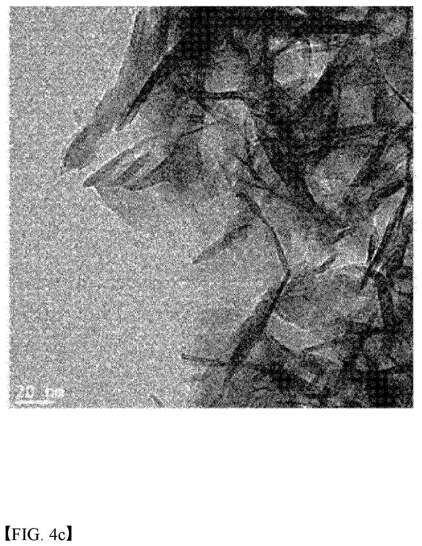

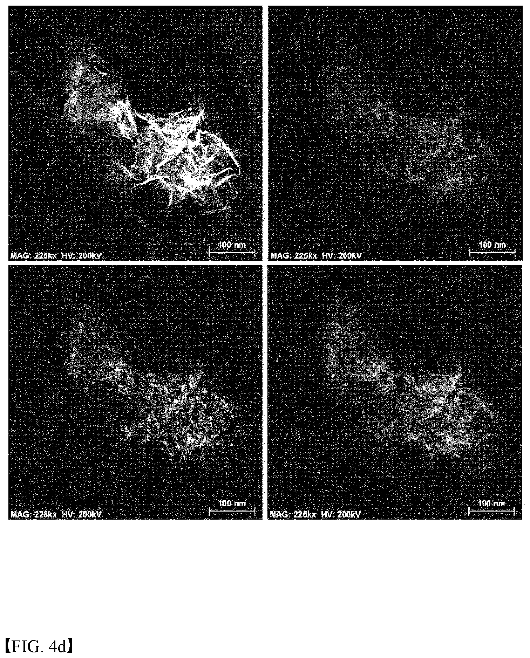

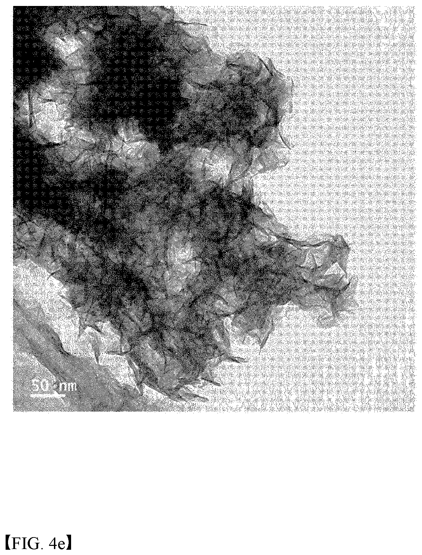

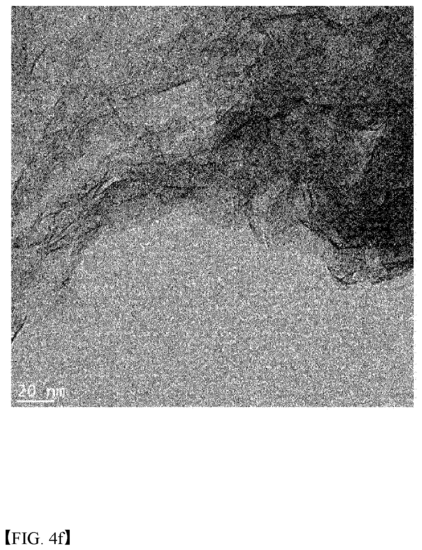

Specifically, FIGS. 4a and 4b are TEM images of Preparation Example 2 (B-NiFe-LDH), and FIG. 4c evaluates the elemental distribution on the same scale. Further, FIGS. 4d and 4e are TEM images of Preparation Example 1 (M-NiFe-LDH), and FIG. 4f evaluates the elemental distribution on the same scale.

In FIGS. 4a and 4b, it is confirmed that the thickness of Preparation Example 2 (B-NiFe-LDH) is relatively thick, which indicates that it exists as a layered structure. On the other hand, in FIGS. 4d and 4e, it is confirmed that Preparation Example 1 (M-NiFe-LDH) has a relatively thin thickness (~1 nm), which indicates that it exists as a monolayer structure.

**(2) XRD**

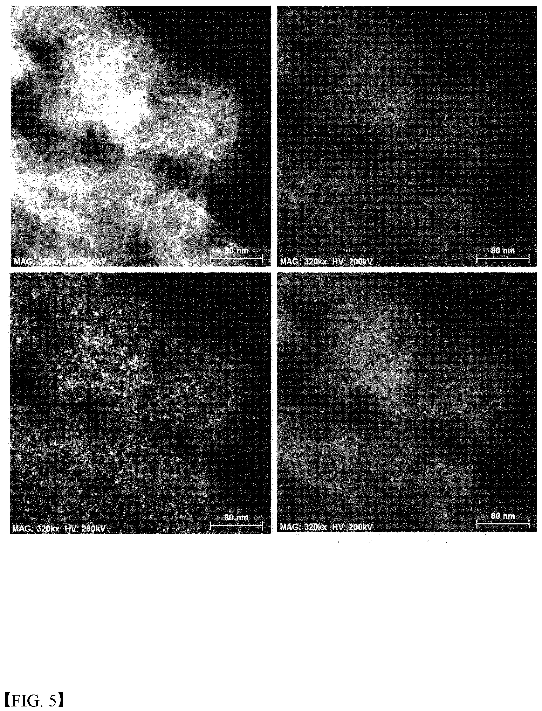

FIG. 5 is a diagram showing each XRD pattern of the catalyst (B-NiFe-LDH) of Comparative Example 1 in powder form, the catalyst (M-NiFe-LDH) of Example 1 dispersed in water to form a colloidal phase, and the catalyst (M-NiFe-LDH) of Example 1 dried in an oven into a powder.

For reference, the catalyst (M-NiFe-LDH) of Example 1 is applied in a colloidal phase in the oxidation electrode manufacturing process, but the catalyst (M-NiFe-LDH) of Example 1 exists in a dry state on the oxidation electrode that has been dried after manufacture.

On the XRD pattern, the catalyst (B-NiFe-LDH) of Comparative Example 1 shows a distinct (003) peak, whereas the (003) peak does not appear when the catalyst (M-NiFe-LDH) of Example 1 is in the colloidal phase. This demonstrates that during the synthesis of the catalyst (M-NiFe-LDH) of Example 1, the growth of NiFe-LDH along the z-axis is suppressed by formamide, and synthesized into a monolayer.

On the other hand, when the catalyst (M-NiFe-LDH) of Example 1, which is the colloidal phase, is dried, it was confirmed that the monolayer structures are laminated and changed to a layer structure, and a (003) peak similar to that of the catalyst (B-NiFe-LDH) of Comparative Example 1 was generated. However, the peak intensity is lower than that of the catalyst (B-NiFe-LDH) of Comparative Example 1, which may cause a difference in performance when applied to an anion exchange membrane water electrolysis cell.

**Experimental Example 2: Evaluation of Oxidation Electrode**

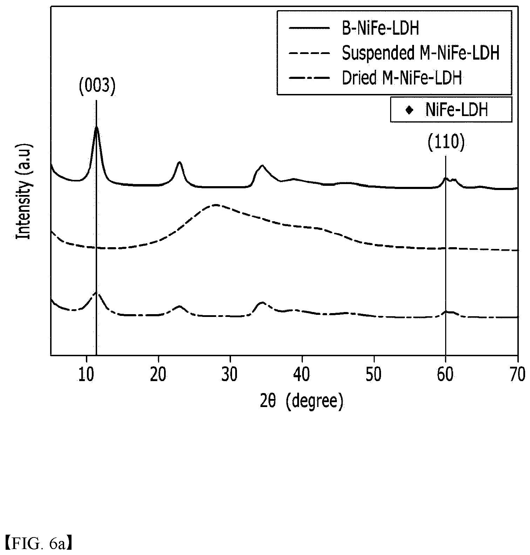

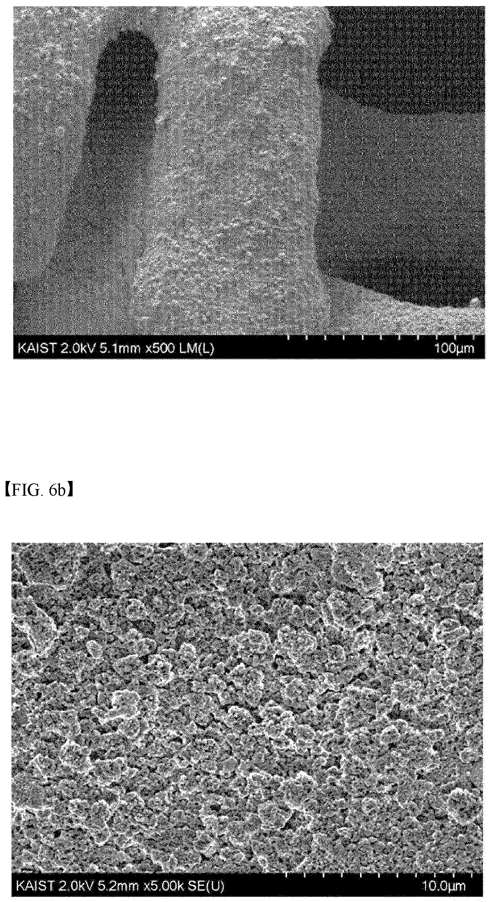

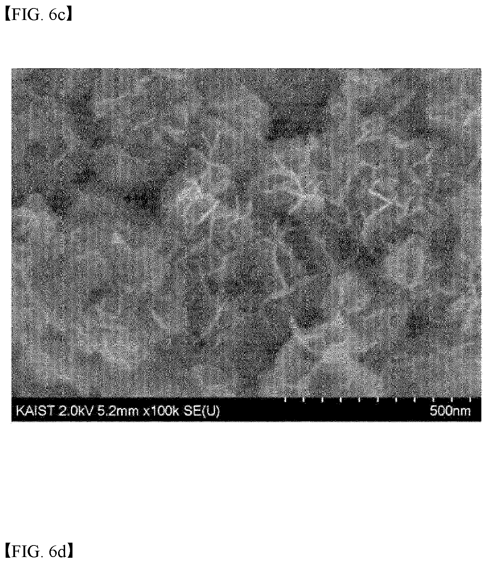

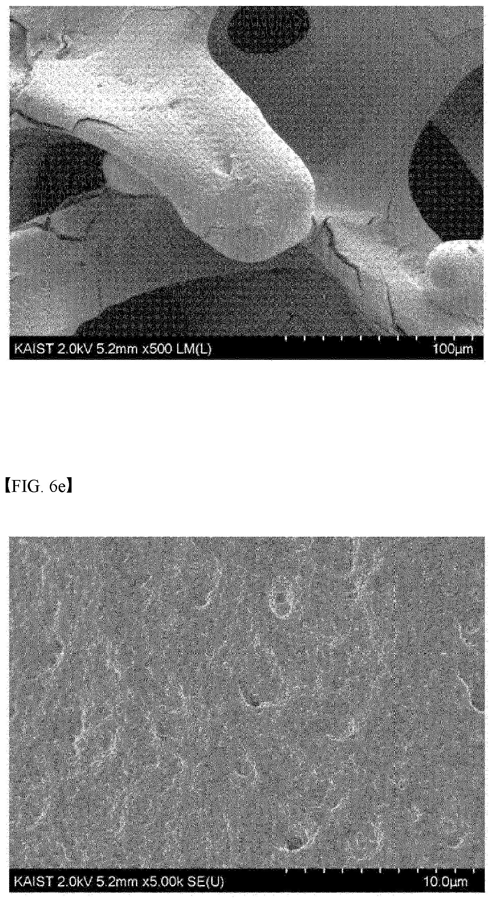

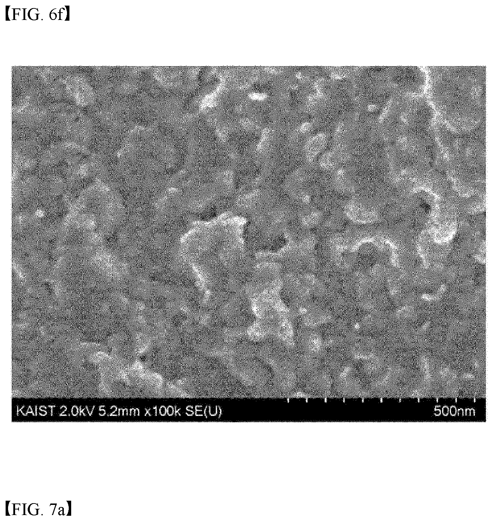

For each oxidation electrode of Example 1 and Comparative Example 1, SEM (Scanning Electron Microscope) images were obtained, and shown in FIGS. 6a and 6f.

Through SEM, the distribution form of the catalyst on the electrode surface can be confirmed.

Specifically, FIGS. 6a to 6c are SEM images of the oxidation electrode (B-NiFe-LDH on Ni foam) of Comparative Example 1, which confirms that nanoparticles in a bulk state exist in an aggregated state.

On the other hand, FIGS. 6d to 6f are SEM images of the oxidization electrode (M-NiFe-LDH on Ni foam) of Example 1, which confirms that the monolayer NiFe-LDHs densely adheres and exhibits a smooth surface.

In this regard, when M-NiFe-LDH is used, it has excellent contact characteristics with nickel metal (specifically, Ni foam) and excellent contact characteristics with anion exchange membrane, which can improve the performance of the anion exchange membrane water electrolysis cell.

More specifically, the performance of the anion exchange membrane water electrolysis cell was evaluated in Experimental Example 3 below.

**Experimental Example 3: Evaluation of Anion Exchange Membrane Water Electrolysis Cell**

**(1) Current-Voltage Graph**

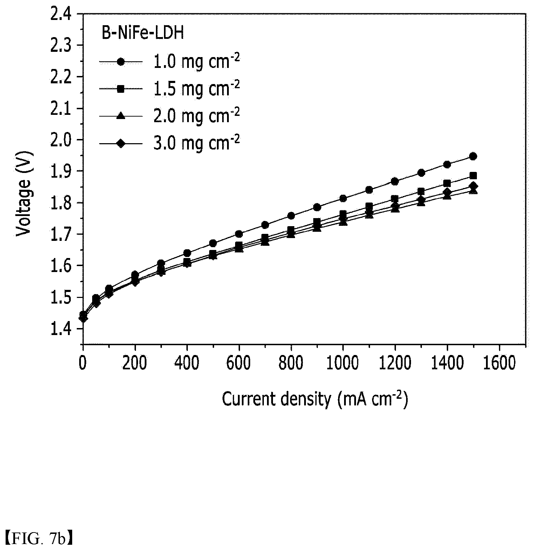

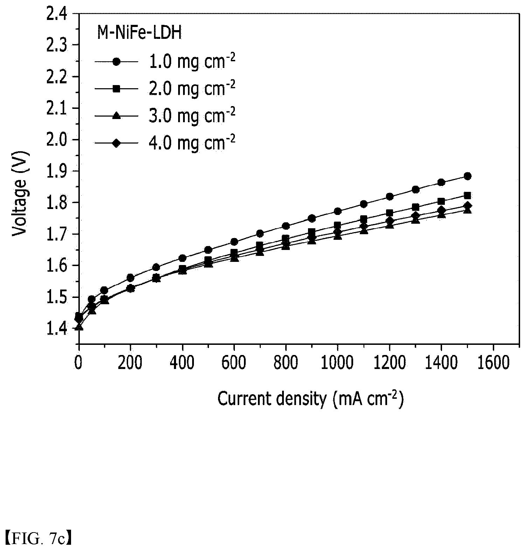

A current-voltage graph of each anion exchange membrane water electrolysis cell of Comparative Examples 1 to 5 is shown in FIG. 7A; a current-voltage graph of each anion exchange membrane water electrolysis cell of Examples 1 to 4 is shown in FIG. 7b; and a current-voltage graph of each anion exchange membrane water electrolysis cell of Example 3 having the highest efficiency among Examples, and Comparative Example 5 together with Comparative Example 3 having the highest efficiency among Comparative Examples is shown in FIG. 7C. Driving conditions are 50°C and 1 A/cm$^2$, respectively.

Here, when "energy conversion efficiency" was calculated with the following Equation,

$$[Equation\ 1]\ \eta[=E]\_0/V$$

$$[Equation\ 2]\ E\_0 = -\Delta G\ /\ \eta F$$

$$[Equation\ 3]\ \Delta G = \Delta H - T\Delta S$$

wherein, in Equations 1 to 3,
$\eta$ is the energy conversion efficiency,
E0 is the voltage thermodynamically required for water electrolysis ($H_2O \rightarrow H_2 + \frac{1}{2} O_2$),
V is the measured voltage,
$\Delta G$ is the free energy that changes after the water electrolysis reaction,
n is the number of participating electrons (2), and
F is the faradaic constant (96485 C/mol).

When calculated using Equations 1 to 3, it can be seen that the highest efficiency of B-NiFe-LDH at 50°C and 1 A/cm² is 69.5%, the highest efficiency of M-NiFe-LDH is 71.3%, and the efficiency of Ni foam is 53.2% under the same conditions.

**(2) Time-Voltage Graph**

Example 3 having the highest efficiency among Examples, Comparative Example 3 having the highest efficiency among Comparative Examples, and Comparative Example 6 using a commercially available lithium oxide (IrOx) catalyst, were evaluated for the stability of each anion exchange membrane water electrolysis cell.

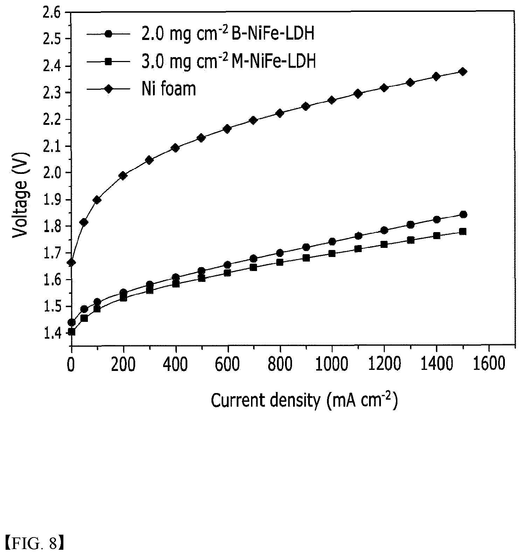

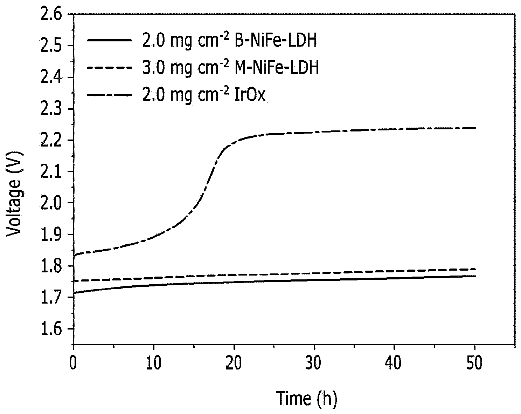

Specifically, each anion exchange membrane water electrolysis cell was subjected to a galvanostatic experiment under the conditions of 50°C and 1 A/cm² to measure a change in overpotential. The results are shown in FIG. 8.

It can be confirmed from FIG. 8 that in Comparative Example 6 using a commercially available Iridium oxide (IrOx) catalyst, the overvoltage increased rapidly and the performance rapidly deteriorated.

On the other hand, in the case of Example 3 and Comparative Example 3, stable driving progressed compared to Comparative Example 6. Among them, it can be seen that the driving of Example 3 is more stable.

**Claims**

1. An oxidization electrode for anion exchange membrane water electrolysis, comprising:

    a nickel metal; and
    a layered double hydroxide (LDH) with a monolayer structure containing nickel and iron and disposed on one surface of the nickel metal.

2. The oxidization electrode for anion exchange membrane water electrolysis according to claim 1, wherein:
    a weight ratio of nickel/iron in the layered double hydroxide is 15/85 to 85/15.

3. The oxidization electrode for anion exchange membrane water electrolysis according to claim 1, wherein:
    a loading amount of the layered double hydroxide per one surface of the nickel metal is 0.1 to 5 mg/cm².

4. The oxidization electrode for anion exchange membrane water electrolysis according to claim 1, wherein:
    a thickness of the nickel metal is 150 to 350 μm.

5. The oxidization electrode for anion exchange membrane water electrolysis according to claim 1, wherein:

in:
the nickel metal has a porosity of 50 to 200 PPI.

6. A method for manufacturing an oxidization electrode for anion exchange membrane water electrolysis, the method comprising the steps of:

    injecting an alkaline aqueous solution and an aqueous metal solution containing a nickel source and an iron source into an aqueous formamide solution to produce a raw material mixture solution;
    reacting the raw material mixture solution to produce a layered double hydroxide (LDH) with a monolayer structure containing nickel and iron; and
    applying the layered double hydroxide onto one surface or both surfaces of nickel metal.

7. The method for manufacturing an oxidization electrode for anion exchange membrane water electrolysis according to claim 6, wherein:
    the aqueous metal solution contains 0.5 to 1.5 wt.% of a nickel source, 0.1 to 1.0 wt.% of an iron source, and the balance water relative to the total amount (100 wt.%).

8. The method for manufacturing an oxidization electrode for anion exchange membrane water electrolysis according to claim 6, wherein:
    the alkaline aqueous solution is an aqueous sodium hydroxide solution.

9. The method for manufacturing an oxidization electrode for anion exchange membrane water electrolysis according to claim 8, wherein:
    a molar concentration of the aqueous sodium hydroxide solution is 0.05 to 5 M.

10. The method for manufacturing an oxidization electrode for anion exchange membrane water electrolysis according to claim 6, wherein:
    the aqueous formamide solution contains 15 to 40 vol.% of formamide and the balance water relative to the total amount (100 vol.%).

11. The method for manufacturing an oxidization electrode for anion exchange membrane water electrolysis according to claim 6, wherein:

    during the production of the raw material mixture solution,
    50 to 200 parts by weight of the alkaline aqueous solution and 50 to 200 parts by weight of the aqueous metal solution are mixed based on 100 parts by weight of the aqueous formamide solution.

**12.** The method for manufacturing an oxidization electrode for anion exchange membrane water electrolysis according to claim 6, wherein:
the reaction of the raw material mixture solution is carried out within the range of pH 9 to 11.

**13.** The method for manufacturing an oxidization electrode for anion exchange membrane water electrolysis according to claim 6, wherein:
the reaction of the raw material mixture solution is carried out within the temperature range of 70 to 90°C.

**14.** The method for manufacturing an oxidization electrode for anion exchange membrane water electrolysis according to claim 6, wherein:
the reaction of the raw material mixture solution is carried out for 1 to 20 minutes.

**15.** The method for manufacturing an oxidization electrode for anion exchange membrane water electrolysis according to claim 6, further comprising,

after the reaction of the raw material mixture solution,
washing the layered double hydroxide using a washing solvent; and
dispersing the washed layered double hydroxide in water.

**16.** The method for manufacturing an oxidization electrode for anion exchange membrane water electrolysis according to claim 6, wherein:
when applying the layered double hydroxide, a Nafion solution is added to the layered double hydroxide and then applied.

**17.** The method for manufacturing an oxidization electrode for anion exchange membrane water electrolysis according to claim 6, wherein:
when applying the layered double hydroxide, a spray drying method is used.

**18.** The method for manufacturing an oxidization electrode for anion exchange membrane water electrolysis according to claim 6, wherein:

when applying the layered double hydroxide, the nickel metal is disposed on a hot plate at 70 to 90°C.

**19.** An anion exchange membrane water electrolysis cell comprising:

an anion exchange membrane; and
a reduction electrode and an oxidation electrode respectively disposed on both sides of the anion exchange membrane,

wherein the oxidation electrode is the oxidation electrode of claim 1.

【FIG. 1】

[FIG. 2a]

EP 4 245 891 A1

Bulk NiFe layered double hydroxide
(B-NiFe-LDH)

Solution A: $NiCl_2 \cdot 6H_2O$ + $FeCl_3 \cdot 9H_2O$ + deionized water
Solution B: NaOH + $Na_2CO_3$ + deionized water

Solution A ⎫
            ⎬ Add drop by drop to:
Solution B ⎭

deionized water at room temperature,
maintaining pH = 8.5

Stir for 24 hours

Wash with deionized water & ethanol

Dry in over at 60 ℃

[FIG. 2b]

Monolayer NiFe layered double hydroxide
(M-NiFe-LDH)

Solution A: $Ni(NO_3)_2 \cdot 6H_2O$ + $Fe(NO_3)_2 \cdot 9H_2O$ + deionized water
Solution B: NaOH + deionized water

Solution A
Solution B
} Add drop by drop to:
deionized water & formamide at 80 ℃,
maintaining pH = 10

Stir for 10 min &
cool down to room temperature

Wash with deionized water & ethanol

Store in wet state

[FIG. 3a]

**B-NiFe-LDH on Ni foam electrode**

2 ml DIW + 8 ml EtOH +
10 wt% Nafion solution

Sonication for 1 h

50 mg of B-NiFe-LDH powder

Spray gun

Ni foam

Hot plate
(80℃)

Catalyst layer

[FIG. 3b]

M-NiFe-LDH on Ni foam electrode

【FIG. 4a】

【FIG. 4b】

【FIG. 4c】

【FIG. 4d】

【FIG. 4e】

【FIG. 4f】

【FIG. 5】

【FIG. 6a】

【FIG. 6b】

【FIG. 6c】

KAIST 2.0kV 5.2mm x100k SE(U)    500nm

【FIG. 6d】

**【FIG. 6e】**

【FIG. 6f】

【FIG. 7a】

【FIG. 7b】

【FIG. 7c】

【FIG. 8】

## INTERNATIONAL SEARCH REPORT

| | International application No. |
|---|---|
| | **PCT/KR2021/016363** |

| **A.** | **CLASSIFICATION OF SUBJECT MATTER** |
|---|---|

**C25B 11/091**(2021.01)i; **C25B 1/04**(2006.01)i; **C25B 9/23**(2021.01)i

According to International Patent Classification (IPC) or to both national classification and IPC

| **B.** | **FIELDS SEARCHED** |
|---|---|

Minimum documentation searched (classification system followed by classification symbols)

C25B 11/091(2021.01); B82Y 30/00(2011.01); C01D 15/02(2006.01); C01F 5/14(2006.01); C01G 49/00(2006.01); C25B 1/04(2006.01); C25B 11/04(2006.01); C25D 9/04(2006.01); H01M 8/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음이온 교환막 (anion exchange membrane), 수전해 (water electrolysis), 층상 이중 수산화물 (layered double hydroxide), 단층구조 (monolayer)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y <br><br> A | KR 10-2020-0119097 A (KOREA INSTITUTE OF SCIENCE AND TECHNOLOGY) 19 October 2020 (2020-10-19) <br> See claims 1-6; and paragraph [0110]. | 1-5,19 <br><br> 6-18 |
| Y | SONG, F. et al. Exfoliation of layered double hydroxides for enhanced oxygen evolution catalysis. nature communications. 2014, vol. 5, thesis no. 4477, pp. 1-9. <br> See page 7. | 1-5,19 |
| A | KR 10-1745335 B1 (KOREA INSTITUTE OF ENERGY RESEARCH) 13 June 2017 (2017-06-13) <br> See entire document. | 1-19 |
| A | EP 3015429 A1 (WINTERSHALL HOLDING GMBH) 04 May 2016 (2016-05-04) <br> See entire document. | 1-19 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 February 2022** | **25 February 2022** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

International application No.

**PCT/KR2021/016363**

**C.    DOCUMENTS CONSIDERED TO BE RELEVANT**

| Category* | Citation of document, with indication, where appropriate, of the relevant passages | Relevant to claim No. |
|---|---|---|
| A | KR 10-0481591 B1 (HYUPJIN I&C CO., LTD.) 08 April 2005 (2005-04-08) See entire document. | 1-19 |

# EP 4 245 891 A1

| INTERNATIONAL SEARCH REPORT |||| International application No. |
|---|---|---|---|---|
| Information on patent family members |||| PCT/KR2021/016363 |

| Patent document cited in search report | | | Publication date (day/month/year) | Patent family member(s) | | | Publication date (day/month/year) |
|---|---|---|---|---|---|---|---|
| KR | 10-2020-0119097 | A | 19 October 2020 | KR | 10-2237529 | B1 | 07 April 2021 |
| KR | 10-1745335 | B1 | 13 June 2017 | JP | 2019-502016 | A | 24 January 2019 |
| | | | | WO | 2018-074723 | A1 | 26 April 2018 |
| EP | 3015429 | A1 | 04 May 2016 | None | | | |
| KR | 10-0481591 | B1 | 08 April 2005 | KR | 10-0928213 | B1 | 25 November 2009 |
| | | | | KR | 10-2004-0042195 | A | 20 May 2004 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200150363